# EUROPÄISCHE PATENTSCHRIFT

(11) **EP 2 805 047 B1**
(45) Veröffentlichungstag und Bekanntmachung des Hinweises auf die Patenterteilung: **27.02.2019**
(21) Anmeldenummer: 13708062.8
(22) Anmeldetag: 15.01.2013
(51) Int. Cl.: F03D 15/00, F16C 17/10, F16H 57/08

(54) **WINDKRAFTANLAGE**
WIND TURBINE
ÉOLIENNE

(30) Priorität: 16.01.2012 AT 382012
(43) Veröffentlichungstag der Anmeldung: 26.11.2014
(73) Patentinhaber: Miba Gleitlager Austria GmbH, 4663 Laakirchen (AT)
(72) Erfinder: KARI, Alexander, A-5330 Fuschl am See (AT)
(74) Vertreter: Burger, Hannes
(86) Internationale Anmeldenummer: PCT/AT2013/050011
(87) Internationale Veröffentlichungsnummer: WO 2013/106878

(56) Entgegenhaltungen:
- EP-A2- 2 031 273
- WO-A1-2004/048805
- WO-A1-2007/135156
- CN-U- 202 074 011
- DE-A1-102005 048 527
- GB-A- 585 930
- US-A1- 2004 162 181

## Beschreibung

Die Erfindung betrifft eine Windkraftanlage mit einem Rotor und einem Generator, wobei zwischen dem Rotor und dem Generator ein Planetengetriebe angeordnet ist, das in Wirkverbindung mit dem Rotor und dem Generator steht, wobei das Planetengetriebe zumindest ein Planetenrad, zumindest einen Planetenbolzen, und einen Planetenträger aufweist, und wobei das Planetenrad auf dem Planetenbolzen angeordnet ist, wobei zwischen dem Planetenbolzen und dem Planetenträger zumindest ein Gleitlager angeordnet ist, das Planetenrad mit dem Planetenbolzen drehfest verbunden ist, und der Planetenträger mehrteilig ausgebildet ist und einen Innenteil sowie einen damit verbundenen Außenteil aufweist, und der Innenteil benachbart zum Planetenbolzen angeordnet ist, und wobei das zumindest eine Gleitlager durch den Innenteil des Planetenträgers gebildet ist.

Planetengetriebe für Windkraftanlagen zur Erzeugung von elektrischem Strom, wie sie zum Beispiel aus der DE 102 60 132 A1 bekannt sind, werden dazu verwendet, um die relativ geringe Drehzahl des Rotors der Windkraftanlage in eine höhere Drehzahl des Generatorrotors zu übersetzten. Üblicherweise werden in derartigen Planetengetrieben, wie dies ebenfalls in der DE 102 60 132 A1 beschrieben ist, Wälzlager als Lagerelemente für die Planetenräder verwendet. Der Stand der Technik beschreibt aber auch Gleitlager als Lagerelemente, beispielsweise die EP 1 544 504 A2 oder die AT 509 624 A1.

Die hohe elastische Deformation der Planetenträger eins Windgetriebes, insbesondere im Multi-Megawatt-Leistungsbereich, führt im Zusammenspiel mit einem umlaufenden Angriffspunkt zu einem so genannten Außenringwandern von Wälzlagern. Selbst durch eine sehr hohe Überdeckung des Außenrings mit dem Innendurchmesser des Planetenrades lässt sich diese Relativbewegung nicht vermeiden und wird häufig durch den Verzicht des Außenrings und der Ausführung der Planetenbohrung als Wälzkörperlauffläche gelöst.

In der Ausführung mit Gleitlagern ist eine derartige Lösung praktisch nicht möglich, zumindest aber nicht praktikabel. Diese Lösung des Problems würde nämlich eine Direktbeschichtung der Planetenbohrung bedeuten. In der Praxis scheitert dies an der notwendigen Wärmebehandlung zur Härtung der Planetenräder, weshalb alle bekannten metallischen und synthetischen Lagerwerkstoffe ausscheiden. Weiter ist durch die große Wandstärke der Planetenräder ein Ausguss der Planetenbohrung im Rotationsverfahren mit metallischen Werkstoffen sehr problematisch. Nicht zuletzt stellt die Direktbeschichtung auch ein logistisches Problem dar, da die Planetenräder eines Windkraftanlagengetriebes üblicherweise mehrere hundert Kilogramm je Planetenrad aufweisen.
In der AT 509 624 A1 wird beschrieben, dass eine radiale Verschiebbarkeit der Mehrschichtgleitlager möglich ist, sodass auch Kantenträger ausgebildet werden können. Dies wird durch eine harte Gleitschicht und gegebenenfalls eine Einlaufschicht ausgeglichen bzw. abgefangen.

Die GB 585 930 A beschreibt eine Anlage mit einem Planetengetriebe das zumindest ein Planetenrad, zumindest einen Planetenbolzen und einen Planetenträger aufweist, wobei das Planetenrad auf dem Planetenbolzen angeordnet ist und zwischen dem Planetenbolzen und dem Planetenträger zumindest ein Gleitlager angeordnet ist, und wobei das Planetenrad mit dem Planetenbolzen drehfest verbunden ist.

Die US 2004/162181 A1 beschreibt ein Planetengetriebe für eine Windkraftanlage mit einem Rotorflügel und einem elektrischen Generator, zur Umwandlung der Drehleistung des Rotorflügels mit niedriger Drehzahl und hohem Drehmoment in eine Drehleistung mit hoher Drehzahl und niedrigem Drehmoment zur Elektroenergieerzeugung, wobei das Getriebe ein Gehäuse, ein Hohlrad, welches an dem Gehäuse in dessen Innerem befestigt ist, einen Planetenträger, der zur Drehung um eine im Wesentlichen zentrale Achse innerhalb des Hohlrads montiert und dazu eingerichtet ist, dass er an einem ersten Ende durch einen Rotorflügel angetrieben wird, eine entfernbare Endabdeckung, die angrenzend an ein zweites Ende des Planetenträgers abnehmbar am Gehäuse befestigt ist, mehrere Planetenritzel, die in voneinander beabstandeten Positionen auf dem Planetenträger um die zentrale Achse herumangeordnet sind, wobei die Achsen der Planetenritzel im Wesentlichen parallel zu der zentralen Achse des Planetenträgers verlaufen, ein erstes und ein zweites Lager für jedes Planetenritzel an dem ersten bzw. dem zweiten Ende des Planetenritzels zum Aufnehmen und Lagern der Enden des Planetenritzels zur Drehung relativ zu dem Planetenträger, mehrere Zahnradzähne auf jedem Planetenritzel, die mit dem Hohlrad kämmen und sich zwischen dem ersten und dem zweiten Lager befinden, ein Planetenrad auf jedem Planetenritzel, das sich zwischen dem ersten und dem zweiten Lager befindet, ein Sonnenrad, das um die zentrale Achse drehbar ist und mit den Planetenrädern in Eingriff steht; und ein Endstufenzahnrad, das an das zweite Ende des Planetenträgers angrenzend an dem Sonnenrad abnehmbar montiert ist und von diesem angetrieben wird, wodurch die gesamte Drehleistung des Rotorflügels über die Planetenritzel übertragen wird, wobei jedes Ritzel an seinen beiden Enden zur Drehung durch Lager getragen wird, aufweist.

Weitere Windkraftanlagen sind aus der EP 2 031 273 A2 und der WO 2007/135156 A1 bekannt.

Eine Windkraftanlage entsprechend dem Oberbegriff des Anspruches 1 ist aus der CN 202 074 011 U bekannt.

Es ist die Aufgabe vorliegender Erfindung, die Gleitlagerung in einem mit Gleitlagern ausgerüsteten Planetengetriebe einer Windkraftanlage zu verbessern.

Diese Aufgabe wird bei der eingangs genannten Windkraftanlage dadurch gelöst, dass die Verbindung des Innenteils mit dem Außenteil über ein Verbindungselement ausgebildet ist, das seine größte Abmessung axialer Richtung des Planetenrades aufweist und/oder dass das Innenteil mit dem Außenteil formschlüssig verbunden ist.

Durch die Anordnung des Gleitlagers zwischen dem Planetenbolzen und dem Planetenträger ist eine Lagerung des Planetenrades am Planetenbolzen nicht erforderlich. Es wird damit erreicht, dass die Gleitlager außerhalb des Einflussbereiches des umlaufend verformbaren Planetenrades ist, wodurch die "Walkwirkung" des Planetenrades auf das Gleitlager vermieden wird. Dies stellt auch bei hohen Belastungen des Gleitlagers eine sichere Position des Gleitlagers im Planetenträger sicher. Eine Drehung und/oder eine axiale Verschiebung des Gleitlagers kann dadurch vermieden werden. Zudem können durch diese Anordnung des Gleitlagers enorme Kantenbelastungen durch Kippmomente im Überlastbereich aufgrund des größeren Lagerabstandes, wenn zwei in axialer Richtung voneinander beabstandete Gleitlager verwendet werden, erheblich reduziert werden.

Dadurch, dass der Planetenträger mehrteilig ausgebildet ist und einen Außenteil sowie einen Innenteil aufweist, der benachbart zum Planetenbolzen angeordnet ist, und dass das zumindest einen Gleitlager durch den Innenteil des Planetenträgers gebildet ist, wird mit der Aufteilung des Planetenträgers auf mehrere Bauteile erreicht, dass auf zusätzliche Gleitlager verzichtet werden kann, da der Planetenträger selbst die Aufgabe der Gleitlagerung übernehmen kann. Zudem wird damit eine Gewichtsreduktion erreicht. Von Vorteil ist dabei weiter, dass der Innenteil des Planetenträgers gegebenenfalls ausgetauscht oder neu beschichtet werden kann. Es ist damit auch möglich, bei einer hydrodynamischen Gleitlagerung die Beschichtung relativ dünnwandig auszuführen, wodurch ebenfalls eine Gewichtsreduktion möglich ist. Durch die Summe der Gewichtsreduktionen ist eine geringere mechanische Belastung der Lagerung der Planetenräder realisierbar, wodurch die Gleitlager trotz hydrodynamischer Betriebsweise eine längere Standzeit aufweisen können.

Nach einer Ausführungsvariante ist vorgesehen, dass der Planetenbolzen einstückig mit dem Planetenrad ausgebildet ist. Es ist damit möglich, das Planetengetriebe höheren Belastungen auszusetzen, da durch die Vermeidung einer gesonderten Verbindung zwischen dem Planetenrad und dem Planetenbolzen eine mögliche Bruchstelle eliminiert wird.

Andererseits ist es aber auch möglich, dass der Planetenbolzen mehrteilig ausgebildet ist und einen Mittelteil sowie einen ersten und einen zweiten Seitenteil aufweist, und wobei der Mittelteil durch das Planetenrad gebildet ist. Diese Ausführungsvariante hat im Vergleich zu voranstehend genannter einteiligen Ausführungsvariante den Vorteil, dass die Herstellung des Planetenrades einfacher ist und dass die beiden Seitenteile ein geringeres Gewicht aufweisen, sodass sie einfacher manipuliert werden können, beispielsweise um darauf eine Beschichtung anzubringen.

Zur Vermeidung bzw. Verringerung der axialen Beweglichkeit des Planetenrades kann vorgesehen werden, dass zwischen dem zumindest einen Gleitlager und dem Planetenrad eine Anlaufscheibe angeordnet ist. Es wird damit möglich, dass das Planetenrad seitlich an dem Gleitlager anliegt, sodass bei Verwendung von zwei in axialem Abstand zueinander angeordneten Gleitlagern das Planetenrad zwischen den Gleitlagern platziert werden kann und dadurch eine geringere Beweglichkeit in axialer Richtung aufweist.

Das zumindest eine Innenteil ist mit dem Außenteil verbunden. Es werden damit Relativbewegungen der Gleitlagerung in Bezug auf den Außenteil des Planetenträgers vermieden, wodurch Spitzenbelastungen infolge von
Kippmomenten und damit auch die mögliche Zerstörung der Gleitlagerungen besser vermieden werden können.

Es ist dabei vorgesehen, dass die Verbindung des zumindest einen Innenteils mit dem Außenteil über ein Verbindungselement ausgebildet ist, das seine größte Abmessung axialer Richtung aufweist. Es ist damit eine weitere Reduktion von lokalen Spitzenbelastungen der Gleitlager erreichbar, da damit auf das Lager wirkende Kräfte aus Kippmomenten ausschließlich in axialer Richtung über das Verbindungselement übertragen werden.

Nach einer Ausführungsvariante dazu ist vorgesehen, dass das Innenteil mit dem Außenteil zusätzlich oder alternativ zu voranstehender Verbindungsmethode formschlüssig verbunden ist. Es ist damit eine bessere Kraftübertragung erzielbar. Darüber hinaus kann das Formschlusselement auch als Einbauhilfe des Innenteils an dem Außenteil verwendet werden, indem über das Formschlusselement die richtige Positionierung vorgegeben wird. Dies ist insbesondere in Hinblick auf geteilte Lagerschalen, also beispielsweis Gleitlagerhalbschalen oder Gleitlagersegmente von Vorteil, wenn diese in den beiden Halbschalen oder den Segmenten aus unterschiedlichen Werkstoffen bestehen, wie dies an sich in der Gleitlagertechnik bekannt ist. Es werden dabei für die höher belastete untere Hälfte andere Werkstoffe, insbesondere härtere, verwendet, als in der oberen, weniger belasteten Lagerhälfte.

In der bevorzugten Ausführungsvariante ist das Gleitlager als Buchse ausgebildet, da damit die Einbindung der Gleitlagerung in den Planetenträger einfacher ausgeführt werden kann, indem weniger Verbindungsstellen im Vergleich zu Halbschalen oder Segmenten erforderlich sind.

Zum besseren Verständnis der Erfindung wird diese anhand der nachfolgenden Figuren näher erläutert.

Es zeigen jeweils in schematisch vereinfachter Darstellung:
- Fig. 1: ein Getriebe in Form eines Planetengetriebes in Seitenansicht geschnitten;
- Fig. 2: einen Ausschnitt aus einem Planetenrad im Querschnitt;
- Fig. 3: einen Ausschnitt aus einem Planetenrad im Querschnitt;
- Fig. 4: einen Ausschnitt aus einem Planetenrad einer weiteren Ausführungsvariante im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

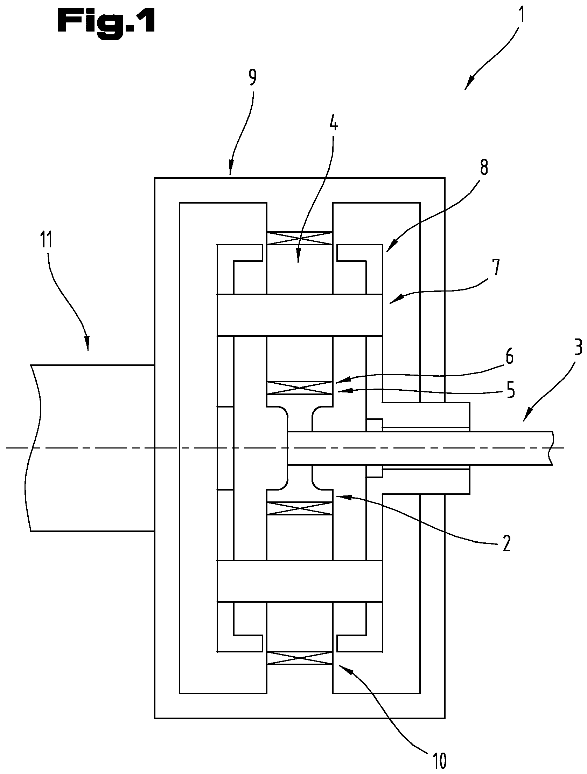

Fig. 1 zeigt ein Getriebe in Form eines einfachen Planetengetriebes 1 für eine Windkraftanlage in Seitenansicht geschnitten.

Bekanntlich umfassen Windkraftanlagen einen Turm an dessen oberen Ende eine Gondel angeordnet ist, in der der Rotor mit den Rotorblättern gelagert ist. Dieser Rotor ist über das Planetengetriebe 1 mit einem Generator, der sich ebenfalls in der Gondel befindet, wirkungsverbunden, wobei über das Planetengetriebe 1 die niedrige Drehzahl des Rotors in eine höhere Drehzahl des Generatorrotors übersetzt wird. Da derartige Ausführungen von Windkraftanlagen zum Stand der Technik gehören, sei an dieser Stelle an die einschlägige Literatur hierzu verwiesen.

Das Planetengetriebe 1 weist ein Sonnenrad 2 auf, das mit einer Welle 3, die zum Generatorrotor führt, drehfest verbunden ist. Das Sonnenrad 2 ist von mehreren Planetenrädern 4, beispielsweise zwei, vorzugsweise drei oder vier, umgeben. Sowohl das Sonnenrad 2 als auch die Planetenräder 4 weisen Stirnverzahnungen 5, 6 auf, die in kämmenden Eingriff miteinander stehen, wobei diese Stirnverzahnungen 5, 6 in Fig. 1 mit einem Kreuz angedeutet sind. Die Planetenräder 4 sind auf einer durch einen Planetenbolzen 7 gebildeten Achse, der so genannten Planetenachse gelagert. Diese Planetenbolzen 7 sind als gesonderte Bauteile in Bohrungen eines Planetenträgers 8 eingesetzt. Über den Planetenrädern 4 ist ein Hohlrad 9 angeordnet, das an einer inneren Oberfläche ebenfalls zumindest teilweise eine Verzahnung 10 aufweist, die in kämmenden Eingriff mit der Stirnverzahnung 6 der Planetenräder 4 steht. Das Hohlrad 9 ist drehfest mit einer Rotorwelle 11 des Rotors der Windkraftanlage verbunden. Die Stirnverzahnungen 5, 6 bzw. die Verzahnung 10 können als Geradverzahnung oder Schrägverzahnung ausgeführt sein.

Da derartige Planetengetriebe 1 dem Prinzip nach ebenfalls bereits aus dem Stand der Technik bekannt sind, beispielsweise aus den voranstehend zitierten Dokumenten zum Stand der Technik, erübrigt sich eine weitere Erörterung an dieser Stelle. Es sei jedoch darauf hingewiesen, dass nicht nur einstufige Ausführungen von Planetengetrieben 1 im Rahmen der Erfindung möglich sind, sondern auch mehrstufige, beispielsweise zwei- oder dreistufige, wozu in zumindest einem Planetenrad 4 weitere Stirnradstufen integriert sein können.

Es sei darauf hingewiesen, dass im Folgenden hinsichtlich des Planetenrades 4 die Einzahl verwendet wird. Es versteht sich aber von selbst, dass die Erfindung auf sämtliche Planetenräder 4 eines derartigen Planetengetriebes 1 anwendbar ist und in der bevorzugten Ausführung sämtliche Planetenräder erfindungsgemäß ausgebildet sind.

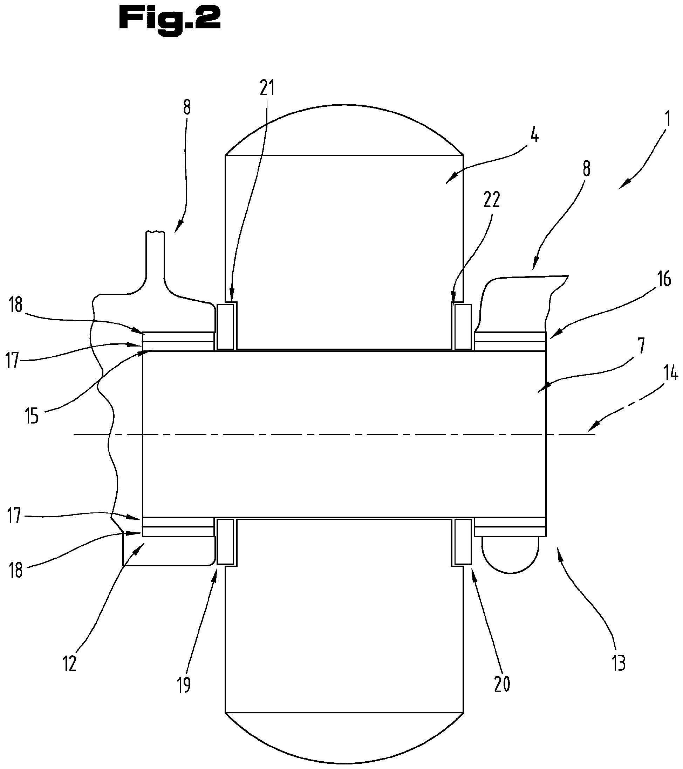

Fig. 2 zeigt einen Ausschnitt aus dem Planetengetriebe 1. Dargestellt ist das Planentenrad 4, der Planetenbolzen 7 sowie der für die Erfindung relevante Teil des Planetenträgers 8.

Der Planetenbolzen 7 ist mit dem Planetenrad 4 drehfest verbunden, beispielsweise mittels eines Presssitzes oder durch Verschweißen, etc., und ist im Planetenträger 8 beidseitig gelagert. Dazu sind in einem ersten Endbereich 12 und in einem zweiten Endbereich 13 des Planetenbolzens 7, der dem ersten Endbereich 12 entlang einer Längsmittelachse 14 des Planetenbolzens 7 in axialer Richtung gegenüberliegt, jeweils zumindest ein Gleitlager 15, 16 zwischen dem Planetenbolzen 7 und dem Planententräger 8 angeordnet.

Bevorzugt sind die Gleitlager 15, 16 als Mehrschichtgleitlager ausgebildet. Die Mehrschichtgleitlager können prinzipiell in Form von Gleitlagerhalbschalen bzw. Gleitlagersegmenten ausgeführt sein. Die Gleitlagerhalbschalen überdecken dabei einen Winkelbereich von zumindest annährend 180 °, die Gleitlagersegmente überdecken hingegen einen davon abweichenden Winkelbereich, beispielsweise 120 ° oder 90 °, sodass also mehr als zwei Gleitlagersegmente angeordnet sind. Bevorzugt sind die Mehrschichtgleitlager jedoch als Lagerbuchsen, d.h. Planetenlagerbuchsen, ausgebildet, die mit dem Planetenbolzen 7 drehfest verbunden sind, beispielsweise über einen Presssitz oder über eine andere, geeignete Methode. Die Gleitlagerhalbschalen bzw. die Gleitlagersegmente können hingegen in entsprechenden Lageraufnahmen, die am Planetenbolzen 7 ausgebildet sind, aufgenommen sein, wie dies an sich bei Gleitlagern bekannt ist.

Ein Mehrschichtgleitlager besteht aus zumindest einer Stützschicht 17 und zumindest einer Gleitschicht 18, die auf der Stützschicht 17 aufgebracht ist (in Fig. 2 nur am linken Gleitlager 15 gezeigt). Die Gleitschicht 18 bildet dabei eine Lauffläche für den Planetenträger 8.

Neben dieser zweischichtigen Ausführung des Mehrschichtgleitlagers besteht auch die Möglichkeit, dass Zwischenschichten zwischen der Gleitschicht 18 und der Stützschicht 17 angeordnet sind, beispielsweise eine Lagermetallschicht und/oder zumindest eine Bindeschicht und/oder eine Diffusionssperrschicht.

Beispiele für Lagermetallschichten sind:
Lagermetalle auf Aluminiumbasis, insbesondere:
   AlSn6CuNi, AlSn20Cu, AlSi4Cd, AlCd3CuNi, AlSi11Cu, AlSn6Cu, AlSn40, AlSn25CuMn, AlSi11CuMgNi;
Lagermetalle auf Kupferbasis, insbesondere:
   CuSn10, CuAl10Fe5Ni5, CuZn31Si1, CuPb24Sn2, CuSn8Bi10;
Lagermetalle auf Zinnbasis, insbesondere:
   SnSb8Cu4, SnSb12Cu6Pb.

Es können auch andere als die genannten Lagermetalle auf Basis von Nickel-, Silber-, Eisen- oder Chromlegierungen verwendet werden.

Eine Bindeschicht oder eine Diffusionssperrschicht kann beispielsweise durch eine Aluminiumschicht, Zinnschicht, Kupferschicht, Nickelschicht, Silbersicht oder deren Legierungen, insbesondere binäre Legierungen, gebildet werden.

Die Stützschicht 17 selbst ist bevorzugt aus einem harten und homogenen Lagergrundwerkstoff, vorzugsweise ausgewählt aus einer Gruppe umfassend Cu-Zn-Legierungen, beispielsweise CuZn31Si, CuSnZn, durch eine AlZn- oder eine CuAl-Legierung, Stahl, gebildet, wobei diese Legierungen weitere Elemente wie Si, Mg, Mn, Ni, Zr, Ti, Fe, Cr, Mo, in einem Gesamtanteil von maximal 10 Gew.-% aufweisen können.

Die Gleitschicht 18 besteht bevorzugt aus einem Werkstoff ausgewählt aus einer Gruppe umfassend Legierungen auf Al-, AlZn-, AlSi-, AlSnSi-, CuAl-, CuSn-, CuZn-, CuSnZn-, CuZnSn-, CuBi-, Bi-, Ag-, AlBi-Basis, Gleitlacke.

Beispiele für bevorzugte Legierungen für die Gleitschicht 18 sind AlSn20Cu, AlZn4Si3, AlZnSi4,5.

Als Gleitlacke können aus dem Stand der Technik für diese Anwendung bekannte Harze bzw. Harzformulierungen verwendet werden.

Bevorzugt wird ein Gleitlack der im trockenem Zustand aus 40 Gew.-% bis 45 Gew.-% MoS₂, 20 Gew.-% bis 25 Gew.-% Graphit und 30 Gew.-% bis 40 Gew.-% Polyamidimid besteht, wobei gegebenenfalls noch Hartpartikel, wie z.B. Oxide, Nitride oder Carbide, im dem Gleitlack in einem Anteil von in Summe maximal 20 Gew.-% enthalten sein können, die einen Anteil der Festschmierstoffe ersetzen.

Es besteht weiter die Möglichkeit, dass auf der Gleitschicht 18 eine polymerbasierte Einlaufschicht, wie zum Beispiel einer der genannten Gleitlacke angeordnet ist. Andererseits besteht die Möglichkeit, dass auf der Gleitschicht 18 zusätzlich noch eine Hartschicht aufgetragen ist, beispielsweise eine so genannte DLC-Schicht, beispielsweise SiC, oder C.

Eine bevorzugte Ausführung der Erfindung verwendet als Stützschicht 17 eine bleifreie Cu-Legierung, insbesondere CuZn31Si, und als Gleitschicht 18 AlSn20Cu.

Weiter wird in der bevorzugten Ausführung die Gleitschicht 18 nach einem PVD-Verfahren auf der Stützschicht 17 oder einer Zwischenschicht abgeschieden, insbesondere nach einem Sputterverfahren.

In der bevorzugten Ausführungsform ist zwischen dem Planentenrad 4 und dem linken Gleitlager 15 sowie zwischen dem Planentenrad 4 und rechten Gleitlager 16 jeweils eine Anlaufscheibe 19, 20 angeordnet ist. Diese Anlaufscheiben 19, 20 können dabei teilweise in jeweils einer Ausnehmung 21, 22 im Planetenrad 4 angeordnet sein, die am Planetenrad 4 im Anschlussbereich an den Planetenbolzen 7 durch einen geringere axiale Breite des Planetenrades 4 ausgebildet sind. Die Anlaufscheiben 19, 20 liegen jeweils unmittelbar an einem der Gleitlager 15 bzw. 16 und an dem Planetenrad 4 an.

Obwohl in Fig. 2 zwei Gleitlager 15, 16 dargestellt sind, besteht im Rahmen der Erfindung auch die Möglichkeit, dass mehr als zwei derartige Gleitlager 15, 16 pro Planetenrad 4 im Planetengetriebe 1 angeordnet werden, beispielsweise in dem auf zumindest einer Seite des Planetenrades 4 zwei in axialer Richtung nebeneinander liegende Gleitlager 15 oder 16 angeordnet werden. Mit anderen Worten können also zumindest zwei Gleitlager 15, 16 pro Planetenrad 4 angeordnet werden.

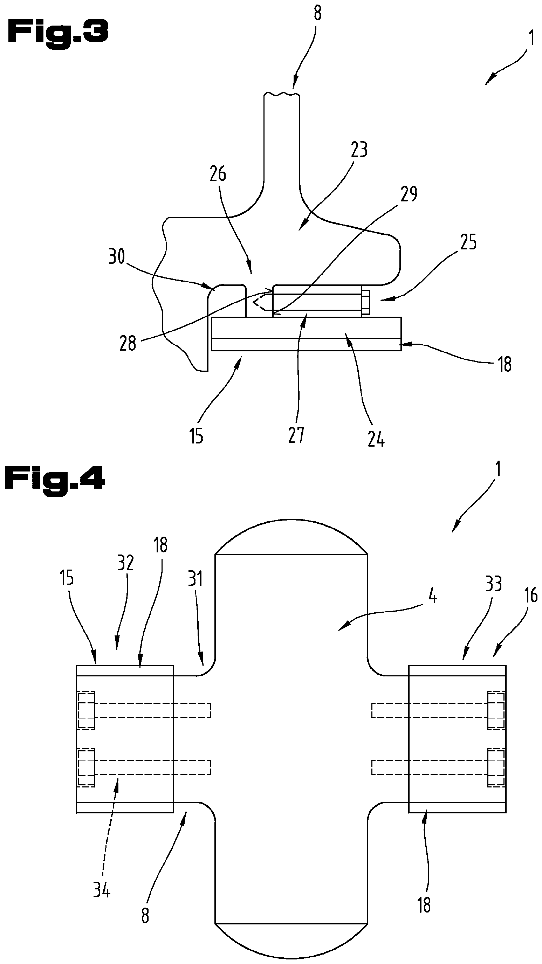

In Fig. 3 ist ein Detail des Planetengetriebes 1 im Bereich des linken Gleitlagers 15 dargestellt, wobei dieses Detail auch auf das rechte Gleitlager 16 (Fig. 2) angewandt werden kann.

Der Planetenträger 8 besteht bzw. umfasst ein Außenteil 23 sowie zumindest ein Innenteil 24.

Das Außenteil 23 des Planetenträgers 8 ist dabei jener Bauteil, der in radialer Richtung des Planetenträgers 8 außen, d.h. zumindest teilweise oberhalb, des zumindest einen Innenteils 24 angeordnet ist. Demzufolge wird unter dem Innenteil 24 des Planetenträgers 8 jener Bauteil verstanden, der in radialer Richtung zumindest teilweise innerhalb, d.h. unterhalb, des Außenteils 23 angeordnet ist. Der Planetenträger 8 liegt über den zumindest einen Innenteil 24 an dem Planetenbolzen 7 an. Das Außenteil 23 hat hingegen keinen Kontakt mit dem Planetenbolzen 7.

Das Innenteil 24 ist getrennt vom Außenteil 23 ausgebildet, also nicht einstückig mit diesem ausgebildet.

Das Innenteil 24 bildet das Gleitlager 15 entsprechend Fig. 2. Dabei wird die Stützschicht 17 durch den Innenteil 23 selbst gebildet, sodass also das Innenteil 24 lediglich zumindest die Gleitschicht 18 aufweisen muss. Es sind aber auch die anderen voranstehend genannten Schichten zusätzlich zur Gleitschicht 18 zur Ausbildung des Mehrschichtgleitlagers anordenbar, insbesondere die Lagermetallschicht.

Das Innenteil 24 ist mit dem Außenteil 23 verbunden. Es wird dazu zumindest ein Verbindungselement 25 verwendet, das seine größte Abmessung axialer Richtung des Planetenbolzens 7 aufweist. Das zumindest eine Verbindungselement 20 kann beispielsweise eine Niete sein. In der bevorzugten Ausführungsvariante ist das Verbindungselement 20 durch eine Gewindeschraube gebildet.

Die Schraube kann eine einfache Gewindeschraube sein. Es ist aber auch möglich Gewindeschrauben mit einem selbsthemmenden Gewinde zu verwenden bzw. eine Schraube mit einem mehrgängigen Gewinde.

Für eine bessere Anbindung des Innenteils 24 an das Außenteil 23 kann das Außenteil 23 einen in radialer Richtung nach innen auf den Planetenbolzen 8 weisenden Steg 26 aufweisen, an dem das zumindest eine Innenteil 24 anliegt. Vorzugsweise ist dieser Steg 26 so ausgebildet, dass er teilweise in radialer Richtung über dem Innenteil 24 platziert ist. Dazu kann gemäß einer weiteren Ausführungsvariante vorgesehen sein, dass das Innenteil 24 einen in radialer Richtung nach außen weisenden Steg 27 aufweist, mit dem das zumindest eine Innenteil 24 an dem Außenteil 23, insbesondere an dem Steg 26 des Außenteils 23, anliegt. Eine Anlagefläche 28 des Innenteils 24 und eine an dieser anliegende Anlagefläche 29 des Außenteils 24 sind dabei zumindest annährend vertikal bzw. vertikal orientiert, wie dies aus Fig. 3 ersichtlich ist.

Zur Verbesserung der Verbindung kann vorgesehen sein, dass die Anlagefläche 28 des Innenteils 24 und/oder die Anlagefläche 29 des Außenteils 23 zumindest bereichsweise aufgeraut ist bzw. sind und/oder zumindest bereichsweise mit einer reibungserhöhenden Beschichtung versehen ist bzw. sind. Als reibungserhöhende Beschichtung kann beispielsweise eine Kleberschicht oder Harzschicht, z.B. aus einem Phenol- oder Acrylatharz, verwendet werden, in der Hartpartikel, wie beispielsweise Oxide, Nitride oder Carbide von Übergangsmetallen, oder Korund, etc., eingelagert sind, wobei diese Hartpartikel bevorzugt über die Beschichtungsoberfläche vorragen, sodass sie sich in die jeweils andere Anlagefläche 28 oder 29 beim Verbinden des Innenteils 24 mit dem Außenteil 23 einprägen.

Die Verbindung der beiden Bauteile des Planetenträgers 8 kann alternativ oder zusätzlich auch über ein Formschlusselement erfolgen, das an dem Innenteil 24, insbesondere an dem Steg 27 des Innenteils 24, angeordnet ist und das bevorzugt über die Anlagefläche 28 des Innenteils 24 vorragt. Das Außenteil 23, insbesondere der Steg 26 des Außenteils 23, weist dazu eine entsprechende Vertiefung auf, in die das Formschlusselement hineinragt. Der Querschnitt der Vertiefung ist dabei an den Querschnitt des Formschlusselementes hinsichtlich seiner Größe angepasst, d.h. dass die beiden Querschnitte annährend gleich groß sind, wobei der Querschnitt der Vertiefung geringfügig größer ist als der Querschnitt des Formschlusselementes (jeweils in gleicher Richtung betrachtet).

Prinzipiell kann das Formschlusselement jede beliebige Form aufweisen, wobei auch Formen mit zumindest einer Hinterschneidung möglich sind. Beispielsweise kann das Formschlusselement noppenförmig oder stegförmig ausgebildet sein. Es ist auch möglich, dass das Formschlusselement in Richtung des Umfangs des Innenteils 24 sich mit seiner Längserstreckung sich erstreckend ausgebildet ist. Des Weiteren kann sich eine Querschnittsfläche in Draufsicht betrachtet sich verjüngend bzw. verbreiternd ausgebildet sein.

Selbstverständlich kann nicht nur ein Formschlusselement 25 angeordnet werden, sondern können mehrere diskrete Formschlusselemente über die Anlagefläche 28 des Innenteils 24 und/oder die Anlagefläche 29 des Außenteils 23 verteilt ausgebildet sein.

Es besteht weiter die Möglichkeit, dass das Innenteil 24 durch Bruchtrennung vom Außenteil 23 hergestellt wird, wobei in diesem Fall die Bruchstelle ebenfalls als Formschlusselement wirken kann.

Es sei darauf hingewiesen, dass die in Fig. 3 dargestellten Stege 26, 27 nur beispielhaften Charakter haben. Es ist beispielsweise nicht zwingend erforderlich, dass der Steg 26 des Außenteils 23 wie in Fig. 3 dargestellt in axialer Richtung unter Ausbildung einer nutförmigen Ausnehmung am Außenteil gebildet ist. Vielmehr kann dieser auch als Absetzung ohne diese Ausnehmung 30 am Außenteil ausgebildet sein.

In der Fig. 4 ist ein Detail einer weiteren Ausführungsform Planetengetriebes 1 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Fig. 4 zeigt das Planetenrad 4 und den Planetenbolzen 7. Nicht dargestellt ist hingegen dar Planetenträger 8. Es sei dazu beispielsweise auf Fig. 2 verwiesen.

Bei dieser Ausführungsvariante des Planetengetriebes 1 ist der Planetenbolzen 8 einstückig mit dem Planetenrad 4 ausgebildet. Bei der dargestellten Ausführungsvariante ist der Planetenbolzen 8 mehrteilig ausgebildet und weist einen Mittelteil 31 sowie einen ersten und einen zweiten Seitenteil 32, 33 auf, und wobei der Mittelteil 31 durch das Planetenrad 4 gebildet ist.

Die beiden Seitenteile 32, 33 bilden bei dieser Ausführungsvariante die Mehrschichtgleitlager, also die Gleitlager 15 und 16, wobei wiederum die Stützschicht nicht durch eine gesonderte Schicht sondern durch das jeweilige Bauteil selbst, also das linke Seitenteil 32 bzw. das rechte Seitenteil 33 gebildet werden. Die Mehrschichtigkeit der Gleitlager 15, 16 kann wie voranstehend beschrieben ausgeführt sein. Zumindest weisen die beiden Seitenteile 32, 33 die Gleitschicht 18 auf.

Bei den beiden Ausführungsvarianten des Planetengetriebes 1 wird die Gleitbeschichtung also durch direkte Abscheidung zumindest der Gleitschicht 18 auf dem jeweiligen Bauteil hergestellt. Die Abscheidung kann beispielsweise aus der Gasphase erfolgen, insbesondere durch Sputtern, oder aber galvanisch, etc.

Die beiden Seitenteile 32, 33 sind mit dem Mittelteil 31 verbunden, insbesondere lösbar, beispielsweise über Schrauben 34, bzw. über eine andere geeignete Methode.

In einer Ausführungsvariante dazu besteht die Möglichkeit, dass der Planetenbolzen 7 einteilig ausgebildet ist und zudem mit dem Planetenrad 4 einteilig ausgebildet ist, sodass diese nur einen einzigen Bauteil des Planetengetriebes 4 bilden.

Bei sämtlichen Ausführungsvarianten können in der Gleitschicht 18 bzw. der Gleitbeschichtung bzw. in zumindest einer Schicht der Gleitbeschichtung kanalförmige Ausnehmungen zur Führung eines Schmiermittels vorgesehen sein.

In der bevorzugten Ausführungsform des Planetenrades können die Gleitlager 15, 16 (auch bei Direktbeschichtung eines Bauteils des Planetengetriebes 1) rein hydrodynamisch ohne hydrostatische Unterstützung betrieben werden. Es sind damit keinerlei Ölpumpen oder dergleichen für die Schmierölzuführung und zur Aufrechterhaltung eines hydrostatischen Druckes erforderlich. Das Öl wird bei dieser rein hydrodynamischen Lösung auf der unbelasteten Lagerseite zugeführt und durch die Drehbewegung des Planetenrades 4 in das Lager hineingezogen.

Der Ordnung halber sei abschließend darauf hingewiesen, dass zum besseren Verständnis des Aufbaus Planetengetriebes 1 dieses bzw. dessen Bestandteile teilweise unmaßstäblich und/oder vergrößert und/oder verkleinert dargestellt wurden.

### Bezugszeichenaufstellung

- 1: Planetengetriebe
- 2: Sonnenrad
- 3: Welle
- 4: Planetenrad
- 5: Stirnverzahnung

- 6: Stirnverzahnung
- 7: Planetenbolzen
- 8: Planetenträger
- 9: Hohlrad
- 10: Verzahnung

- 11: Rotorwelle
- 12: Endbereich
- 13: Endbereich
- 14: Längsmittelachse
- 15: Gleitlager

- 16: Gleitlager
- 17: Stützschicht
- 18: Gleitschicht
- 19: Anlaufscheibe
- 20: Anlaufscheibe

- 21: Ausnehmung
- 22: Ausnehmung
- 23: Außenteil
- 24: Innenteil
- 25: Verbindungselement

- 26: Steg
- 27: Steg
- 28: Anlagefläche
- 29: Anlagefläche
- 30: Ausnehmung

- 31: Mittelteil
- 32: Seitenteil
- 33: Seitenteil
- 34: Schraube

## Patentansprüche

1. Windkraftanlage mit einem Rotor und einem Generator, wobei zwischen dem Rotor und dem Generator ein Planetengetriebe (1) angeordnet ist, das in Wirkverbindung mit dem Rotor und dem Generator steht, wobei das Planetengetriebe (1) zumindest ein Planetenrad (4), zumindest einen Planetenbolzen (7), und einen Planetenträger (8) aufweist, wobei das Planetenrad (4) auf dem Planetenbolzen (7) angeordnet ist, wobei zwischen dem Planetenbolzen (7) und dem Planetenträger (8) zumindest ein Gleitlager (15, 16) angeordnet ist, das Planetenrad (4) mit dem Planetenbolzen (7) drehfest verbunden ist, und der Planetenträger (8) mehrteilig ausgebildet ist und einen Innenteil (24) sowie einen damit verbundenen Außenteil (23) aufweist, und der Innenteil (24) benachbart zum Planetenbolzen (7) angeordnet ist, und wobei das zumindest eine Gleitlager (15, 16) durch den Innenteil (24) des Planetenträgers (8) gebildet ist, **dadurch gekennzeichnet, dass** die Verbindung des Innenteils (24) mit dem Außenteil (23) über ein Verbindungselement (25) ausgebildet ist, das seine größte Abmessung in axialer Richtung des Planetenrades (4) aufweist und/oder dass das Innenteil (24) mit dem Außenteil (23) formschlüssig verbunden ist.

2. Windkraftanlage nach Anspruch 1, **dadurch gekennzeichnet, dass** der Planetenbolzen (7) einstückig mit dem Planetenrad (4) ausgebildet ist.

3. Windkraftanlage nach Anspruch 1, **dadurch gekennzeichnet, dass** der Planetenbolzen (7) mehrteilig ausgebildet ist und einen Mittelteil (31) sowie einen ersten und einen zweiten Seitenteil (32, 33) aufweist, und wobei der Mittelteil (31) durch das Planetenrad (4) gebildet ist.

4. Windkraftanlage nach einem der Ansprüche 1 bis 3, **dadurch gekennzeichnet, dass** zwischen dem zumindest einen Gleitlager (15, 16) und dem Planetenrad (4) eine Anlaufscheibe 19, 20) angeordnet ist.

5. Windkraftanlage nach einem der Ansprüche 1 bis 4, **dadurch gekennzeichnet, dass** das zumindest eine Gleitlager (15, 16) als Gleitlagerbuchse ausgebildet ist.

## Claims

1. A wind turbine with a rotor and a generator, wherein a planetary gear (1) is arranged between the rotor and generator, which interacts with the rotor and the generator, wherein the planetary gear (1) has at least one planetary wheel (4), at least one planetary bolt (7) and a planetary carrier (8), wherein the planetary wheel (4) is arranged on the planetary bolt (7), wherein at least one plain bearing (15, 16) is arranged between the planetary bolt (7) and planetary carrier (8), the planetary wheel (4) is non-rotatably connected with the planetary bolt (7), and the planetary carrier (8) has a multipart design and has an inner part (24) as well as an outer part (23) connected thereto, and the inner part (24) is arranged adjacent to the planetary bolt (7), and wherein the at least one plain bearing (15, 16) is comprised of the inner part (24) of the planetary gear (8), **characterized in that** the connection of the inner part (24) with the outer part (23) is formed via a connecting element (25) that has its very large dimensions in the axial direction of the planetary wheel (4) and/or that the inner part (24) is positively fitted with the outer part (23).

2. The wind turbine according to claim 1, **characterized in that** the planetary bolt (7) is integrally designed with the planetary wheel (4).

3. The wind turbine according to claim 1, **characterized in that** the planetary bolt (7) is multipart in design, and has a middle part (31) along with a first and a second side part (32, 33), and wherein the middle part (31) is comprised of the planetary wheel (4).

4. The wind turbine according to one of claims 1 to 3, **characterized in that** a thrust washer (19, 20) is arranged between the at least one plain bearing (15, 16) and the planetary wheel (4).

5. The wind turbine according to one of claims 1 to 4, **characterized in that** the at least one plain bearing (15, 16) is designed as a plain bearing bushing.

## Revendications

1. Éolienne avec un rotor et un générateur, un engrenage planétaire (1) étant disposé entre le rotor et le générateur, qui est en liaison fonctionnelle avec le rotor et le générateur, l'engrenage planétaire (1) comprenant au moins un pignon satellite (4), au moins un axe de satellite (7) et un support de satellite (8), le pignon satellite (4) étant disposé sur l'axe de satellite (7), au moins un palier lisse (15, 16) étant disposé entre l'axe de satellite (7) et le support de satellite (8), le pignon satellite (4) étant reliée de manière solidaire en rotation avec l'axe de satellite (7) et le support de satellite (8) étant conçu en plusieurs parties et comprenant une partie interne (24) ainsi qu'une partie externe (23) relié à celle-ci et la partie interne (24) étant disposée à proximité de l'axe de satellite (7) et l'au moins un palier lisse (15, 16) étant constitué de la partie interne (24) du support de satellite (8), **caractérisée en ce que** la liaison entre la partie interne (24) et la partie externe (23) est réalisée par un élément de liaison (25) qui présente sa dimension la plus grande dans la direction axiale du pignon satellite (4) et/ou **en ce que** la partie interne (24) est reliée par complémentarité de forme avec la partie externe (23).

2. Éolienne selon la revendication 1, **caractérisée en ce que** l'axe de satellite (7) est constitué d'une seule pièce avec le pignon satellite (4).

3. Éolienne selon la revendication 1, **caractérisée en ce que** l'axe de satellite (7) est constitué de plusieurs parties et comprend une partie centrale (31) ainsi qu'une premier et une deuxième parties latérales (32, 33) et la partie centrale (31) étant constituée du pignon satellite (4).

4. Éolienne selon l'une des revendications 1 à 3, **caractérisée en ce que**, entre l'au moins un palier lisse (15, 16) et le pignon satellite (4), est disposé une rondelle de butée (19, 20).

5. Éolienne selon l'une des revendications 1 à 4, **caractérisée en ce qu'**au moins un palier lisse (15, 16) est conçu comme un coussinet de palier lisse.
